**Europäisches Patentamt**

**European Patent Office**

**Office européen des brevets**

(19)

(11) Veröffentlichungsnummer : **0 035 783**
**B1**

(12) **EUROPÄISCHE PATENTSCHRIFT**

(45) Veröffentlichungstag der Patentschrift :
05.09.84

(21) Anmeldenummer : **81101685.6**

(22) Anmeldetag : **07.03.81**

(51) Int. Cl.³ : **F 02 C   3/26**, F 02 C   3/36,
F 01 K 23/06

(54) **Verfahren und Vorrichtung zur Strom- und Wärmeerzeugung aus Brennstoffen.**

(30) Priorität : **11.03.80 DE 3009237**

(43) Veröffentlichungstag der Anmeldung :
**16.09.81 Patentblatt 81/37**

(45) Bekanntmachung des Hinweises auf die Patenterteilung : **05.09.84 Patentblatt 84/36**

(84) Benannte Vertragsstaaten :
**AT BE CH DE FR GB IT LI LU NL SE**

(56) Entgegenhaltungen :
**DE-A- 2 556 454**
**DE-A- 2 733 029**
**DE-B- 1 240 338**

(73) Patentinhaber : **Bergwerksverband GmbH**
**Franz-Fischer-Weg 61**
**D-4300 Essen 13 (DE)**

(72) Erfinder : **Giertz, Franz, Dipl.-Ing.**
**Fichtenhain 8**
**D-4030 Ratingen 4 (DE)**
Erfinder : **Bonn, Bernhard, Dr.**
**Soniusweg 12**
**D-4300 Essen 15 (DE)**

(74) Vertreter : **Schumacher, Horst, Dr.**
**Bergwerksverband GmbH Patent- und Vertragsabtei-**
**lung Franz-Fischer-Weg 61**
**D-4300 Essen 13 (DE)**

## Beschreibung

Die Erfindung betrifft ein Verfahren gemäß Oberbegriff von Anspruch 1 sowie eine Vorrichtung zum Durchführen dieses Verfahrens.

Im allgemeinen werden Strom und Wärme durch Wärmekraftwerke erzeugt, die sich im wesentlichen aufgrund ihrer Verbrennungsverfahren voneinander unterscheiden. Ausgangspunkt der Technologie der Strom- und Wärmeerzeugung ist in diesem Fall die Rostfeuerung, wobei Kohle in einem ruhenden Bett verbrannt wird, gefolgt von der Kohlenstaubfeuerung, bei der Kohle in Form einer schwebenden Staubwolke verbrannt wird. Die Wirbel (schicht)-verbrennung ist zwischen den beiden erwähnten Feuerungsverfahren anzusiedeln. Eine Wirbelbettfeuerung ist dann gegeben, wenn die Geschwindigkeit des von unten her dem Wirbelbett zugeführten Luftstromes so stark zunimmt, daß das feste Schichtmaterial zunächst in den Schwebezustand überführt und mit weiter zunehmender Luftgeschwindigkeit in eine mehr oder weniger wirbelförmige Bewegung versetzt wird. Das Bettmaterial (Wirbelgut) muß bei Wirbelbettverbrennung nicht zwangsläufig aus dem Brennstoff selbst bestehen — es ist auch üblich, hierfür inertes Material wie Sand, Kalkstein, Asche usw. zu verwenden und den festen, flüssigen oder gasförmigen Brennstoff im Bettmaterial zu dispergieren und mit dem oxidierend wirkenden Wirbelgas zu verbrennen. Wirbelbettverbrennung kann unter Umgebungsdruck oder unter erhöhten Drücken ablaufen. Die Wirbelbettdruckfeuerung hat den Vorteil, daß die entsprechenden Anlagen als sehr kompakte Einheiten ausgeführt werden können.

Bisher liegen recht wenige Erkenntnisse über den Betrieb von Wirbelbettdruckfeuerung in Verbindung mit einer Gasturbinenanlage vor. Pilotanlagen für den Druckbetrieb sind entweder derzeit im Planungsstadium, vor dem Anlaufen oder im Versuchsstadium.

Es ist schon vorgeschlagen worden, zur Strom- und Wärmeerzeugung aus Kohle durch Wirbelbettdruckfeuerung die zugeführte Luft durch einen Kompressor der Gasturbine auf Betriebsdruck zu bringen und dann in zwei Strömen in die Wirbelbettverbrennungskammer einzuleiten. Einer der Teilströme wird dem Wirbelbett direkt als Verbrennungsluft zugeführt, während der zweite Teilstrom durch einen Wärmeaustauscher (Wärmetauscher) geschleust wird, der in die Wirbelbettfeuerung eingelassen ist. Das Verbrennungsgas, welches eine Temperatur von etwa 860 °C hat, wird in einem elektrischen Abscheider gereinigt und mit dem heißen Luftstrom aus dem Wärmeaustauscher vereinigt; beides gelangt dann in die Gasturbine. Die in den entspannten Gasen verbleibende Wärme wird über einen Abhitzekessel zurückgewonnen. Danach werden die Abgase in einen Schornstein eingeleitet (VGB Kraftwerkstechnik 59 (1979), Heft 8, Seite 636, rechte Spalte, letzter Absatz auf Seite 637, linke Spalte, Absatz 1 und Abbildung 7).

Die Reinigung des heißen Gases ist bei diesem herkömmlichen Verfahren besonders schwierig. Für diesen Zweck stehen elektrische Abscheider, Zyklone oder Kiesfilter zur Verfügung; bei allen drei Typen der Staubabscheidegeräte stellt die hohe Rauchgastemperatur von etwa 860 °C einen erschwerenden Faktor dar. Zusätzlich müssen die heißen Gase durch entsprechende Heißgasleitungen an die einzelnen Aggregate der Gasturbinenanlage mit Wirbelbettdruckfeuerung herangeführt werden. Zu diesem Zwecke sind teure Rohrleitungen erforderlich, die entweder aus hochlegierten Chrom-Nickel-Stählen oder aus einer inneren und äußeren Rohrwandung gefertigt oder mit Ausmauerung und Innenliner versehen oder als luftgekühlte Doppelmantelrohre ausgeführt sind, wenn die Rauchgase bei Temperaturen von etwa 860 °C hindurchgeleitet werden.

Aus der DE-B-1 240 338 ist bereits eine Rauchgasbehandlung bekannt, die eine Gasturbinenanlage mit einer Druckbrennkammer für feste Brennstoffe betrifft, bei der die heißen Rauchgase vor der Reinigung abgekühlt und nachher wieder erhitzt werden, um den Vorteil niedrigerer Temperaturen beim Reinigungsprozeß auszunutzen, der insbesondere darin besteht, daß die Entstaubungsanlage aus nicht hochhitzebeständigem Material erstellt werden kann.

Weiterhin ist aus der DE-A-2 733 029 eine Rauchgasbehandlung bekannt, die eine Gasturbinenanlage mit einem druckbetriebenen Schmelzkammerkessel für feste Brennstoffe betrifft, wobei die Entstaubung und Entschwefelung vorteilhaft auf relativ niedrigem Temperaturniveau erfolgt, indem eine Kühlung der heißen Rauchgase mit kaltem, gereinigtem Rauchgas vorgenommen wird.

Aufgabe der vorliegenden Erfindung ist die Vervollkommnung des Gasturbinenverfahrens mit Druckwirbelbett einmal im Hinblick auf die Staubabscheidung aus den Rauchgasen bzw. auf die Konstruktion entsprechender Rohrleitungen sowie die Modifizierung des Rauchgases vor seinem Eintritt in den Gasreiniger zur Milderung der korrodierenden und aggressiven Eigenschaften des Gases in ihren Auswirkungen auf den Reiniger und die Bereitstellung eines ausreichend entstaubten Gases mit definierter Temperatur zum Einsatz in der Gasturbine sowie zum anderen die Einsparung eines aufwendigen zusätzlichen Apparates für die Wiederaufheizung der gereinigten Gase unter gleichzeitiger Ausnutzung der guten Wärmeübertragungseigenschaften der vorhandenen Wirbelschichtfeuerung.

Die Aufgabe wird im Hinblick auf ein Verfahren der eingangs genannten Art erfindungsgemäß durch die kennzeichnenden Merkmale des Anspruches 1 gelöst. Bevorzugte Ausführungsformen und Weiterbildungen der Erfindung finden sich in den Ansprüchen 2 bis 6 bzw. 7 bis 10, letzteres im Hinblick auf eine Vorrichtung.

Durch die vorliegende Erfindung wird ein Verfahren zur Strom- und Wärmeerzeugung z. B. aus Kohle mit Hilfe einer Wirbelbettdruckfeuerung vorgestellt, wobei die heißen Rauchgase gekühlt werden, dann einer Reinigungseinrichtung zugeführt und anschließend in einen in der Wirbelschicht angeordneten Wärmeaustauscher zurückgeleitet werden, wo sie wieder auf Rauchgastemperatur erhitzt und schließlich einer Gasturbine zugeführt werden. Die vorliegende Erfindung hat u. a. den Vorteil, daß die Rauchgasentstaubung bei einer niedrigeren Temperatur, z. B. bei 450 °C, durchgeführt werden kann. Bei einer derartigen Temperatur sind die elektrischen Abscheider und Filter vollständig betriebstüchtig. Darüber hinaus ist bei solchen Temperaturen sogar die Verwendung von Gewebefiltern möglich. Außerdem liegen die Rohrtemperaturen der Anlage in einem Bereich, der durch herkömmliche Werkstoffe abgedeckt werden kann, mit Ausnahme einer kurzen Rohrstrecke zwischen dem Austritt des Wärmeaustauschers und dem Gasturbineneintritt. Darüber hinaus lassen sich durch das Absenken der Betriebstemperatur von etwa 860 auf 450 °C die Armaturen vereinfachen, was sich auch auf die Anlagensteuerung auswirkt. Schließlich wird bei der erfindungsgemäßen Anordnung die ohnehin erforderliche Kühlung der Wirbelschicht gleich mit von diesem Wärmetauscher vorgenommen. Außerdem wird der apparative Aufwand beträchtlich vermindert.

Die aus dem Wirbelbett austretenden Rauchgase können bekanntlich Temperaturen von etwa 800 bis 900 °C haben. Das Rauchgas wird bevorzugt auf Temperaturen zwischen etwa 400 und 500 °C abgekühlt bei diesen Temperaturen lassen sich nämlich die bekannten Abscheidungseinrichtungen einsetzen.

Die Temperatur des wiedererhitzten Rauchgases sollte bevorzugt zwischen etwa 680 °C und 870 °C liegen, um eine ausreichend hohe Arbeitstemperatur zu gewährleisten.

Das aus dem Wirbelbett stammende Rauchgas kann besonders einfach durch Zusatz komprimierter Luft abgekühlt werden ; bevorzugt wird Druckluft, sowohl als gasförmiges Oxidationsmittel als auch als Kühlzusatz, in einer den Bedürfnissen angepaßten Verteilung verwendet. z. B. kann ein Teil der ohnehin für die Verbrennung erzeugten Druckluft vor der Verbrennungskammer abgezweigt und dem heißen Rauchgasstrom zwecks Abkühlung zugesetzt werden, der aus dem Wirbelbett austritt.

Das Rauchgas kann auch in bekannter Weise durch Wärmeaustausch abgekühlt werden, wobei ein derartiger Wärmeaustauscher im gleichen Druckbehälter wie die Verbrennungskammer, und zwar möglichst im Gasvolumen oberhalb des Wirbelbettes untergebracht wird.

Es ist vorteilhaft, einen weiteren mit Wasser und/oder Dampf gekühlten Wärmeaustauscher im Wirbelbett selbst anzuordnen. Diese Ausführungsform kann zusätzlich eingesetzt werden.

Diese Ausführungsform ist dann vorteilhaft, wenn mit Wasser/Dampfkühlung gearbeitet wird und bestimmte Temperaturen gehalten werden müssen. Bei kleineren Anlagen ist es vorzuziehen, Luft für Kühlzwecke einzusetzen, während bei größeren Anlagen die Kühlung über Wärmeaustauscher besser ist. Die Vorteile dampf- und/oder wassergekühlter Wärmeaustauscher gelten natürlich auch für die Wärmeaustauscher zur Kühlung der Rauchgase vor dem Reinigungsschritt.

Im Teillastbetrieb der Anlage kann ein Teil des gereinigten Rauchgases abgezweigt werden, bevor es in den Wärmeaustauscher gelangt, und dem wiedererhitzten Rauchgasstrom anschließend wieder zugesetzt werden.

Der entspannte Rauchgasstrom kann zur Dampferzeugung durch Wärmeaustausch und der erzeugte Dampf wiederum zum Antrieb einer Dampfturbine verwendet werden. Das Gasturbinenverfahren läßt sich also durch ein Dampfturbinenverfahren zu einem Verbundverfahren ausweiten.

Es wird außerdem eine Vorrichtung zur Strom- und/oder Wärmeerzeugung aus Brennstoffen vorgestellt, zu der folgendes gehört : ein an eine Aufgabequelle für gasförmige Oxidationsmittel angeschlossener Kompressor, eine Verbrennungskammer mit einer Wirbelschicht aus festem Wirbelschichtmaterial, wobei die Kammer an eine Aufgabe für den Brennstoff und an den Kompressor angeschlossen ist ; eine Brennkammer-Austrittsöffnung zur Ableitung des Rauchgases ; Rauchgas-Kühleinrichtungen, die mit der Verbrennungskammer und/oder mit deren Austrittsöffnung verbunden sind ; Rauchgas-Reinigungseinrichtungen, die mit der Kühleinrichtung verbunden sind ; ein an die Gasreinigungseinrichtungen angeschlossener Wärmeaustauscher, der in der Verbrennungskammer zum Wiederaufheizen des aus dem Gasreiniger austretenden Rauchgases angeordnet ist und eine mit dem Wärmeaustauscher verbundene Gasturbine.

An die Gasturbine kann ein Rekuperator bzw. an diesen ein Schornstein zur Ableitung der Abgase angeschlossen werden. Die Kühlung kann durch Aufgabe eines der folgenden Medien bewirkt werden : Druckluft, Druckabgas, Dampf, Druckluft aus dem Kompressor über einen Rohranschluß, gereinigtes Rauchgas aus dem Gasreiniger, das durch einen Rohranschluß zugeführt wird bzw. entsprechende Gemische. Die Kühlung kann auch durch einen Wärmeaustauscher bewirkt werden. Als Gasreiniger lassen sich einsetzen : ein elektrischer Abscheider, Zyklone, filternde Abscheider, Schikanen und/oder Wäscher.

Weitere Ziele, Merkmale, Vorteile und Anwendungsmöglichkeiten der vorliegenden Erfindung ergeben sich aus den nachfolgenden Beschreibungen von Ausführungsbeispielen anhand der beiliegenden Zeichnungen.

Auf den beigefügten Zeichnungen, worauf zwei der verschiedenen Ausführungsformen dieser Erfindung dargestellt sind, zeigen

Figur 1   das Schema einer mit Kohle befeuerten Gasturbinenanlage, in der Druckluft als Kühlmittel für das Rauchgas eingesetzt wird,

Figur 2   das Schema einer mit Kohle befeuerten Gasturbinenanlage, in der ein Wärmeaustauscher als Kühlmittel für das Rauchgas eingesetzt wird.

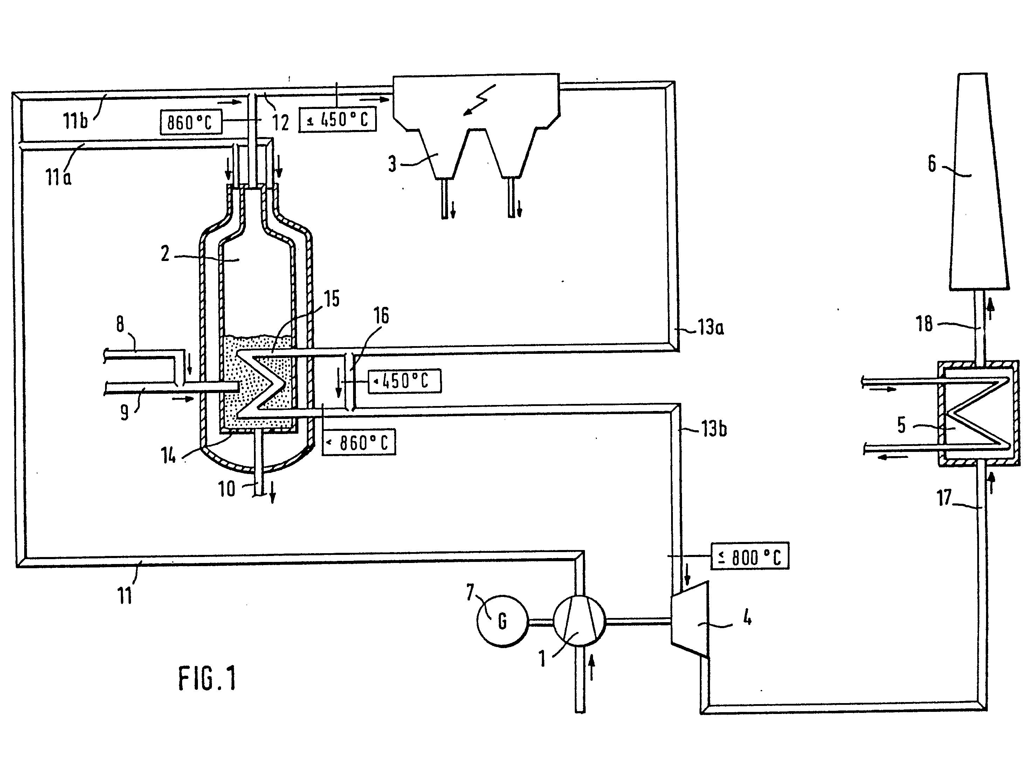

In Fig. 1 wird die Aufgabe von Kohle durch Rohrleitung 9 bzw. von Kalk durch Rohrleitung 8 in die Verbrennungskammer 2 eines Druckwirbelbettes gezeigt. Die Kohle wird in der Verbrennungskammer bei einer Temperatur von etwa 860 °C verbrannt. Der Zusatz von Kalk bindet den aus der Kohle freigesetzten Schwefel und wird, zusammen mit der Asche, durch Rohrleitung 10 über Schieber abgezogen.

Die zur Verbrennung benötigte Wirbelluft wird durch den Kompressor 1 auf den gewünschten Betriebsdruck komprimiert und dann über Rohrleitungen 11 und 11a durch das Mantelrohr dem Anströmboden 14 der Verbrennungskammer 2 des Druckwirbelbettes zugeführt ; daraufhin strömt das Gas im Wirbelbett aufwärts. Die Kühlluft für das Rauchgas wird vom Hauptluftstrom abgezweigt und durch Rohrleitung 11b in den Rauchgasstrom von Rohrleitung 12 eingeleitet. Auf diese Weise wird der Rauchgasstrom von ca. 860 auf ca. 450 °C abgekühlt. Das Rauchgas wird anschließend bei dieser Temperatur in einem elektrostatischen Filter und Staubabscheider 3 gereinigt und durch Rohrleitung 13a einem Wärmeaustauscher 15 zugeführt, der im Wirbelbett eingelassen ist. Hier wird das Rauchgas wieder auf eine Temperatur von etwa 860 °C gebracht. Um die Gasturbine mit Teillast fahren zu können, kann ein Teil des Rauchgases über Rohrleitung 16 abgezweigt werden, bevor es dem Wärmetauscher 15 zum Wiederaufheizen zugeleitet wird ; danach kann es den aufgeheizten Gasen in Rohrleitung 13b vor der Gasturbine erneut als Kühlluft zugesetzt werden. Das Gas expandiert in der Gasturbine 4, die den Kompressor 1 und den Generator 7 antreibt. Die expandierten Gase werden durch Rohrleitung 17 einem Rekuperator oder Abhitze-Wärmeaustauscher 5 zur Wärme-Extraktion zugeleitet und anschließend über Rohrleitung 18 in den Abgasschornstein 6 eingeleitet.

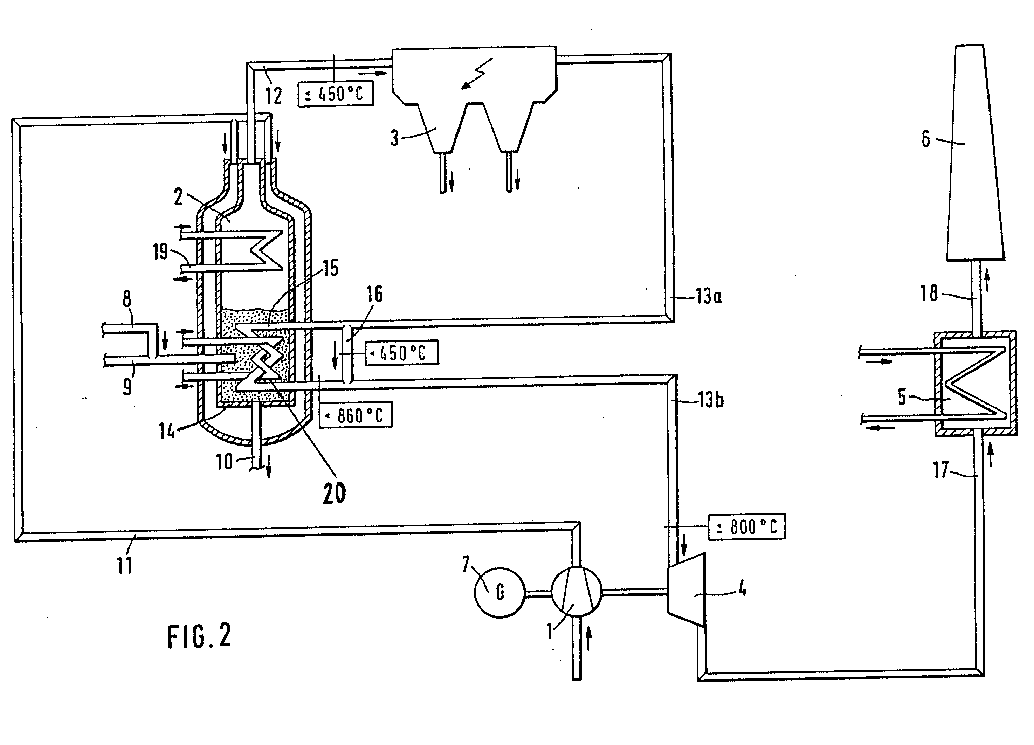

Die Fig. 2 stimmt im wesentlichen mit Fig. 1 überein ; gleiche Teile werden mit den gleichen Zahlen bezeichnet. Bei der Ausführungsform nach Fig 2 gibt es keine Druckluftleitung 11b. Dafür ist ein mit Wasser oder Dampf gekühlter Wärmeaustauscher 19 vorgesehen sowie ein mit Wasser oder Dampf gekühlter Wärmeaustauscher 20, der innerhalb des Wirbelbettes angeordnet ist. Beabsichtigt man, Gas- und Dampf-Turbine im Verbund zu fahren, wird das Wasser im Wärmeaustauscher 5 vorerhitzt, dann im Wärmeaustauscher 20 in Dampf umgewandelt, der seinerseits im Wärmeaustauscher 19 überhitzt wird.

Beispiel 1

Etwa 1 kg SKE-Kohle/s wird in die Verbrennungskammer 2 nach Fig. 1 aufgegeben, was einer Wärmeleistung von 29,4 MW entspricht. 1 kg SKE ist der Wärmeinhalt von 1 kg Steinkohle. Die Kompressionswärme, die im Verdichter 1 erzeugt wird, erhitzt den Luftstrom in Rohrleitung 11 auf eine Temperatur von etwa 230 °C. Die Wärmeverluste in der Verbrennungskammer betragen etwa 3 MW. Etwa 13 kg Luft/s werden dem Wirbelbett zur Verbrennung der zugeführten Kohle (Rohrleitung 1a) aufgegeben. Diese Menge reicht bei geeigneter Konstruktion des Verbrennungskammerquerschnittes auch aus, um das Wirbelbett zu fluidisieren. Unter Berücksichtigung der hinzukommenden Verbrennungsprodukte verläßt der Rauchgasstrom die Verbrennungskammer mit etwa 13,7 kg/s und einer Temperatur von etwa 860 °C. Ein Kühlgasvolumen von 26,3 kg/s wird dem Rauchgas über Rohrleitung 11b für Kühlzwecke zugesetzt, so daß in Rohrleitung 12 ein Massestrom von etwa 40 kg/s bei einer Temperatur von etwa 450 °C vorhanden ist, der nach dem Entstauben im Reiniger 3 dem Wärmeaustauscher 15 über Rohrleitung 13a aufgegeben wird. Um diese Gasmenge auf etwa 820 °C zu erhitzen, wird eine Wärmemenge von etwa 16,3 MW aus der Verbrennungskammer abgezogen, was ungefähr 55 % der Gesamtwärmeleistung der Verbrennungskammer entspricht. Die verbleibende Wärmeleistung verteilt sich auf die im Rauchgas beförderte Wärmeleistung sowie auf Abstrahlungs- bzw. Kühlverluste der Verbrennungskammer. Der wieder aufgeheizte Gasstrom wird durch Rohrleitung 13b der Gasturbine 4 zugeführt und das Gas leistet dort unter Abkühlung Arbeit. Der Generator 7 hat eine elektrische Leistung von etwa 6,5 MW ; das Abgas tritt in den Wärmeaustauscher 5 mit einer Temperatur von etwa 450 °C ein, erbringt dort noch eine Wärmeleistung von ca. 11 MW und wird danach bei einer Temperatur von etwa 180 bis 200 °C in den Abgasschornstein 6 eingeleitet.

Beispiel 2

Dieses Beispiel bezieht sich auf ein Kraftwerk nach Fig. 2. Der Kohledurchsatz beträg auch hier 1 kg SKE/s, was einer Wärmeleistung von 29,4 MW entspricht. Die etwa 13 kg/s an benötigter Verbrennungsluft werden durch den Gasturbinenverdichter bereitgestellt und der Verbrennungskammer zugeleitet. Die Druckluft dient als Oxidationsmittel für die Kohle und außerdem zur Aufwirbelung des Kohlebettes. Das Rauchgas mit etwa 13,7 kg/s wird durch den mit Wasser oder Dampf betriebenen Wärmeaustauscher auf ca. 400 °C, abgekühlt, wodurch etwa 7,1 MW Wärmeleistung an das Kühlmedium abgegeben werden. Das abgekühlte Rauchgas wird entstaubt und dann durch den im Wirbelbett angeordneten Wärmeaustauscher wieder auf ca. 820 °C aufgeheizt, wobei etwa 6,5 MW Wärmeleistung aufgenommen werden ; das Rauchgas wird dann der Gasturbine 4 zugeführt. In der Gasturbine erbringt das Rauchgas eine Arbeitsleistung und dehnt sich aus. Es kühlt hierdurch beispielsweise auf etwa 480 °C ab und setzt im Wärmeaustauscher 5 ca. 3,4 MW Wärmeleistung frei, bevor es bei einer Temperatur von etwa 160 °C durch den Schornstein abgeleitet wird.

Bei dieser Verteilung der Masseströme bleibt noch die Überschußleistung der Verbrennungskammer, die durch einen zusätzlichen, in der Wirbelschicht angeordneten, mit Wasser oder Dampf betriebenen Wärmeaustauscher abgeschieden werden kann. Geht man von 3 MW Verlust durch Wärmeabstrahlung und Wärmeleitung aus, so ergibt diese Zusatzmenge etwa 8,9 MW. Auf diese Weise ergibt sich im Beispiel ein Verhältnis des durch die Dampfturbine erzeugten Stromes zu dem durch die Gasturbine erzeugten Strom von etwa 6 : 1.

Es dürfte klar sein, daß jeder oben beschriebene Bauteil bzw. zwei oder mehr von ihnen zusammengenommen sich auch in anderen Systemzusammenstellungen und anderen Stromerzeugungsverfahren als den oben beschriebenen mit Erfolg einsetzen lassen.

Obwohl die Erfindung im Zusammenhang mit einem Gasturbinenkraftwerk dargestellt und beschrieben worden ist, bedeutet dies keine Beschränkung im Sinne der gezeigten Details, da mehrere Abwandlungen und Abänderungen im Aufbau vorgenommen werden können, ohne daß in irgendeiner weise vom Wesen der Erfindung abgewichen würde.

**Ansprüche**

1. Verfahren zur Strom- und Wärmeerzeugung aus Brennstoffen mittels einer druckbetriebenen Wirbelschichtfeuerung, bei der die Rauchgase entstaubt, dann einer mit einem Generator verbundenen Gasturbine und anschließend einem Abhitzekessel zugeführt werden, wobei ein in einem Verdichter komprimiertes gasförmiges Oxidationsmittel als Verbrennungs/Wirbel-Gas in die Wirbelschicht eingeführt wird, dadurch gekennzeichnet, daß

a) das heiße Rauchgas, wie an sich bekannt, vor dem Entstauben abgekühlt und nach dem Enstauben wieder erhitzt wird und

b) das gereinigte Rauchgas zur Wiedererhitzung durch einen in der Wirbelschicht angeordneten Wärmetauscher geleitet wird.

2. Verfahren nach Anspruch 1, dadurch gekennzeichnet, daß das aus der Wirbelschicht stammende Rauchgas durch Zusatz von Druckluft gekühlt wird.

3. Verfahren nach Anspruch 2, dadurch gekennzeichnet, daß Luft sowohl als gasförmiges Oxidationsmittel als auch als Kühlzusatz komprimiert und nach Bedarf verteilt wird.

4. Verfahren nach einem oder mehreren der Ansprüche 1 bis 3, dadurch gekennzeichnet, daß ein Teilstrom des gereinigten Rauchgases vor der Wiedererhitzung abgezweigt und dann dem wiedererhitzten Teilstrom der gereinigten Rauchgase wieder zugemischt wird.

5. Verfahren nach einem oder mehreren der Ansprüche 1 bis 4, dadurch gekennzeichnet, daß etwa 800-900 °C heiße Rauchgase auf etwa 400 bis 500 °C abgekühlt werden.

6. Verfahren nach einem oder mehreren der Ansprüche 1 bis 5, dadurch gekennzeichnet, daß die Wirbelschicht durch einen wasser- oder dampfgekühlten, in sie eingetauchten Wärmetauscher gekühlt wird.

7. Vorrichtung zum Durchführen des Verfahrens nach Anspruch 1 mit

a) einer Zuleitung (9) für Brennstoffe,

b) einer Zuleitung (11) für gasförmiges Oxidationsmittel,

c) einem Kompressor (1), der mit der Zuleitung (11) des gasförmigen Oxidationsmittels verbunden ist,

d) einer Verbrennungskammer mit einem Wirbelbett (2) aus festem Wirbelgut und Brennstoff, wobei die Verbrennungskammer mit der Brennstoffzuleitung (9) und dem Kompressor (1) verbunden ist,

e) einer Austrittsöffnung an der Verbrennungskammer zum Ableiten des Rauchgases,

f) einer Reinigungseinrichtung (3) für Rauchgas sowie

g) einer Gasturbine (4),
gekennzeichnet durch

h) eine Rauchgaskühleinrichtung (11 b), die mit der Verbrennungskammer einerseits sowie der Reinigungseinrichtung (3) andererseits verbunden ist und

i) einen Wärmetauscher (15), der an die Reinigungseinrichtung (3) angeschlossen und zur Wiedererhitzung des aus der Reinigungseinrichtung (3) austretenden Rauchgases in der Verbrennungskammer angeordnet und mit der Gasturbine (4) verbunden ist.

8. Vorrichtung nach Anspruch 7, gekennzeichnet durch eine, wie an sich bekannt, in der Verbrennungskammer angeordnete zusätzliche Rauchgaskühleinrichtung (19).

9. Vorrichtung nach Anspruch 7 oder 8, gekennzeichnet durch einen filternden Gasentstauber (3) oder einen elektrischen Gasentstauber (3).

10. Vorrichtung nach einem oder mehreren der Ansprüche 7 bis 9, gekennzeichnet durch einen in die Wirbelschicht eingetauchten wasser- oder dampfgekühlten Wärmetauscher (20).

**Claims**

1. A method of generating current and heat from fuels by means of a pressure-driven fluidized bed furnace, in which the flue gases are de-dusted and are then fed to a gas turbine connected to a generator and subsequently to a waste-heat boiler, a gaseous oxidizing agent compressed in a compressor being introduced as a combustion/fluidizing gas into the fluidized bed, characterized in that

a) the hot flue gas, as known *per se*, is cooled before de-dusting and is then heated again after de-dusting, and

b) the purified flue gas is passed on for reheating through a heat exchanger disposed in the fluidized bed.

2. A method according to Claim 1, characterized in that the flue gas originating in the fluidized bed is cooled by the addition of compressed air.

3. A method according to Claim 2, characterized in that air is compressed and distributed according to requirements both as a gaseous oxidizing agent and as a cooling additive.

4. A method according to one or more of Claims 1 to 3, characterized in that a partial flow of the purified flue gas is diverted before the reheating and is then admixed again with the reheated partial flow of the purified flue gases.

5. A method according to one or more of Claims 1 to 4, characterized in that hot flue gases at approximately from 800 to 900 °C are cooled to approximately from 400 to 500 °C.

6. A method according to one ore more of Claims 1 to 5, characterized in that the fluidized bed is cooled by a water- or steam-cooled heat exchanger which is immersed therein.

7. An apparatus for performing the method according to Claim 1, comprising

a) a feed pipe (9) for fuels,

b) a feed pipe (11) for gaseous oxidizing agent,

c) a compressor (1) which is connected to the feed pipe (11) of the gaseous oxidizing agent,

d) a combustion chamber with a fluidized bed (2) of solid material and fuel, the combustion chamber being connected to the fuel feed pipe (9) and the compressor (1),

e) an outlet opening on the combustion chamber for drawing off the flue gas,

f) a purifying device (3) for flue gas, and

g) a gas turbine (4),

characterized by

h) a flue gas cooling device (11b) which is connected to the combustion chamber on the one hand and to the purifying device (3) on the other, and

i) a heat exchanger (15) which is joined to the purifying device (3) and which, in order to reheat the flue gas leaving the purifying device (3) is disposed in the combustion chamber and is connected to the gas turbine (4).

8. An apparatus according to Claim 7, characterized by an additional flue gas cooling device (19) disposed in the combustion chamber, as known per se.

9. An apparatus according to Claim 7 or 8, characterized by a filtering gas de-duster (3) or an electrical gas de-duster (3).

10. An apparatus according to one or more of Claims 7 to 9, characterized by a water- or steam-cooled heat exchanger (20) immersed in the fluidized bed.

**Revendications**

1. Procédé pour la production de courant et de chaleur à partir de combustibles au moyen d'un foyer à couche fluidisée, commandé par la pression, dans lequel les gaz de fumée sont dépoussiérés, puis amenés à une turbine à gaz reliée à un générateur, et finalement amenés à une chaudière de récupération, un moyen d'oxydation sous forme gazeuse, comprimé dans un compresseur, étant introduit comme gaz comburant/tourbillonnant dans la couche fluidisée, caractérisé en ce que

a) le gaz de fumée chaud est, comme connu en soi, refroidi avant le dépoussiérage et chauffé à nouveau après le dépoussiérage ;

b) le gaz de fumée purifié est amené, en vue de son réchauffage, à travers un échangeur de chaleur disposé dans la couche fluidisée.

2. Procédé suivant la revendication 1, caractérisé en ce que le gaz de fumée émanant de la couche fluidisée est refroidi par apport d'air comprimé.

3. Procédé suivant la revendication 3, caractérisé en ce que de l'air, tant comme agent d'oxydation gazeux que comme apport refroidissant, est comprimé et distribué suivant les besoins.

4. Procédé suivant une ou plusieurs des revendications 1 à 3, caractérisé en ce qu'un courant partiel du gaz de fumée purifié est dévié avant le réchauffage, puis à nouveau mélangé au courant partiel réchauffé des gaz de fumée purifiés.

5. Procédé suivant une ou plusieurs des revendications 1 à 4, caractérisé en ce que des gaz de fumée chauds, à 800-900 °C sont refroidis jusqu'à peu près 400 à 500 °C.

6. Procédé suivant une ou plusieurs des revendications 1 à 5, caractérisé en ce que la couche fluidisée est refroidie par un échangeur de chaleur refroidi à l'eau ou à la vapeur, plongé en elle.

7. Dispositif pour la mise en œuvre du procédé suivant la revendication 1, avec

a) un conduit d'amenée (9) pour des combustibles ;

b) un conduit d'amenée (11) pour l'agent d'oxydation gazeux ;

c) un compresseur (1) qui est relié au conduit d'amenée (11) de l'agent d'oxydation gazeux ;

d) une chambre de combustion avec un lit fluidisé (2) de matière tourbillonnante solide et de combustible, la chambre de combustion étant reliée au conduit d'amenée de combustible (9) et au compresseur (1) ;

e) une ouverture de sortie de la chambre de combustion pour le départ du gaz de fumée ;

f) une installation de purification (3) pour le gaz de fumée, ainsi que

g) une turbine à gaz (4),

caractérisé par

h) une installation (11b) de refroidissement de gaz de fumée, qui est reliée d'une part à la chambre de combustion ainsi qu'à l'installation de purification (3) d'autre part ; et par

i) un échangeur de chaleur (15) qui est raccordé à l'installation de purification (3) et disposé dans la chambre de combustion pour le réchauffage du gaz de fumée sortant de l'installation de purification (3), et relié à la turbine à gaz (4).

8. Dispositif suivant la revendication 7, caractérisé par une installation supplémentaire (19) de refroidissement de gaz de fumée, disposée dans la chambre de combustion, comme connu en soi.

9. Dispositif suivant la revendication 7 ou 8, caractérisé par un dépoussiéreur de gaz (3) filtrant ou par un dépoussiéreur de gaz (3) électrique.

10. Dispositif suivant une ou plusieurs des revendications 7 à 9, caractérisé par un échangeur de chaleur (20) refroidi à l'eau ou à la vapeur, plongé dans la couche fluidisée.

FIG.1

860°C
≤ 450°C
< 450°C
< 860°C
≤ 800°C

0 035 783

FIG.2